# EUROPEAN PATENT SPECIFICATION

(11) **EP 3 929 263 B1**
(45) Date of publication and mention of the grant of the patent: **05.07.2023**
(21) Application number: 20785014.0
(22) Date of filing: 31.01.2020
(51) Int. Cl.: C09J 163/00, C09J 11/06, C09J 11/08, C08G 59/40, C08G 59/42, C08G 59/17, C08G 59/50, C08L 63/00, C08L 21/00, C08G 59/66, C08G 75/045, C09J 179/04

(54) **METHOD FOR PREPARING HEAT-RESISTANT STRUCTURAL EPOXY ADHESIVE COMPOSITION HAVING IMPACT RESISTANCE AND STRUCTURAL EPOXY ADHESIVE COMPOSITION USING SAME**
VERFAHREN ZUR HERSTELLUNG EINER HITZEBESTÄNDIGEN STRUKTURELLEN EPOXIDKLEBSTOFFZUSAMMENSETZUNG MIT SCHLAGFESTIGKEIT UND STRUKTURELLE EPOXIDKLEBSTOFFZUSAMMENSETZUNG DAMIT
PROCÉDÉ DE PRÉPARATION D'UNE COMPOSITION ADHÉSIVE ÉPOXY STRUCTURELLE RÉSISTANTE À LA CHALEUR PRÉSENTANT UNE RÉSISTANCE AUX CHOCS ET COMPOSITION ADHÉSIVE ÉPOXY STRUCTURELLE L'UTILISANT

(30) Priority: 05.04.2019 KR 20190039924
(43) Date of publication of application: 29.12.2021
(73) Proprietor: Pusan National University Industry-University Cooperation Foundation, Busan 46241 (KR)
(72) Inventor: CHOI, Young Sun, Busan 47747 (KR)
(74) Representative: Laine IP Oy
(86) International application number: PCT/KR2020/001544
(87) International publication number: WO 2020/204342

(56) References cited:
- WO-A1-2019/060513
- JP-B2- H0 421 711
- KR-A- 20120 034 080
- KR-A- 20150 098 344
- KR-A- 20150 131 015
- KR-A- 20160 099 609
- US-A1- 2012 177 930

## Description

### Field

The present disclosure relates to an adhesive composition that implements high adhesive strength and at the same time has properties of impact-resistance and thermal-resistance. More specifically, the present disclosure relates to an epoxy structural adhesive composition which has both of high adhesive strength and thermal-resistant properties exhibited due to a thermal-resistant epoxy intermediate prepared according to the present disclosure, and in which polymer particles are uniformly dispersed in an appropriate thermal-resistant epoxy monomer to exhibit excellent impact-resistance properties, and a monomer having a vinyl group at an end thereof and a monomer having a thiol group at an end thereof are simultaneously introduced to realize high adhesive strength and fast curable properties, and which is thus useful for bonding eco-friendly automobile parts and industrial parts.

### Description of Related Art

An epoxy adhesive composition is a reactive adhesive composition that includes an epoxy resin, a curing agent, and usually a latent curing accelerator. Upon heating the adhesive, an epoxy group of the epoxy resin reacts with the curing agent that connects an epoxy resin compound via polyaddition reaction to obtain a cured product. The latent curing accelerator has a function of accelerating the curing reaction to shorten a curing time and lower a curing temperature.

The cured product has high adhesive strength and excellent corrosion resistance, and thus tis widely used as a base for a structural adhesive. Because of these properties of the epoxy-based adhesive composition, the composition is useful for automotive and industrial parts that must meet stringent mechanical requirements. However, a conventionally used epoxy adhesive composition is vulnerable to an impact at low and room temperature due to rigidity of epoxy, and has adhesion rapidly reduced at a temperature of 120°C or higher.

Korean Patent No. 10-1693605 discloses an epoxy adhesive composition including a polythiol curing agent and a method for preparing the same. Korean Patent No. 10-1693605 by applies a curing agent including a thiol-based polymer to control low-temperature fast-curable performance to provide a polythiol curing agent composition for an epoxy adhesive.

Further, Korean Patent Application Publication No. 1997-0010919 relates to an epoxy resin adhesive composition, and has an purpose of providing an epoxy resin adhesive composition that has improved impact-resistance while maintaining advantages of epoxy resin. Korea Patent Application Publication No. 1997-0010919 discloses an epoxy resin adhesive composition with improved impact-resistance which is composed of 100 parts by weight of tetraglycidyl ether diaminodiphenyl methane as a tetrafunctional epoxy resin, 20 to 50 parts by weight of diaminodiphenyl methane as an aromatic amine curing agent for curing am epoxy group, and 10 to 30 parts by weight of polyethersulfone as a thermoplastic resin for modification of an epoxy resin; and discloses an epoxy resin adhesive composition with improved impact-resistance which is composed of 100 parts by weight of tetraglycidyl ether diaminodiphenyl methane as a tetrafunctional epoxy resin, 20 to 50 parts by weight of diaminodiphenyl methane as an aromatic amine curing agent for curing an epoxy group, and 10 to 30 parts by weight of denatured polyethersulfone as a thermoplastic resin for modification of an epoxy resin.

The above patent documents disclose techniques for one-component heated thermal-resistant epoxy adhesive composition. However, the above patent documents fail to disclose schemes for a fast-curable thermal-resistant epoxy composition that exhibits high shear adhesive strength such as 30 MPa or greater at room temperature or 28 MPa or greater at 150°C to maintain thermal-resistant properties and high shear adhesive strength while exhibiting high impact-resistance at the same time. Cyanate ester dual cure systems are known from US-A-2012177930.

### DISCLOSURE

### TECHNICAL PURPOSES

The present disclosure has been devised to solve the above problem. Thus, a purpose of the present disclosure is to provide an epoxy composition that simultaneously exhibits both of high adhesive strength and thermal-resistant properties due to a thermal-resistant epoxy intermediate.

Further, a purpose of the present disclosure is to provide an epoxy composition in which polymer particles are uniformly dispersed in a thermal-resistant epoxy monomer to exhibit excellent impact-resistance properties.

Further, a purpose of the present disclosure is to provide a fast-curable thermal-resistant epoxy composition in which a monomer having a vinyl group at an end thereof and a monomer having a thiol group at an end thereof are simultaneously introduced to realize high adhesive strength and fast curable property, thereby exhibiting high shear adhesive strength while maintaining thermal-resistant properties while at the same time exhibiting high impact-resistance properties.

Further, a purpose of the present disclosure is to solve a problem of liquid cyanate ester which has excellent thermal-resistance but has poor storage properties for use as a component of a one-component adhesive and thus to provide an epoxy structural adhesive composition having increased storage and having maintained adhesion and thermal-resistance.

Further, a purpose of the present disclosure is to provide a thermal-resistant epoxy structural adhesive composition with excellent adhesion and thermal-resistance by integrating an epoxy-cyanate ester intermediate and a core-shell rubber with each other.

Further, a purpose of the present disclosure is to provide a thermal-resistant epoxy structural adhesive composition with excellent adhesion by mixing and introducing a phosphate capable of realizing nano-toughening properties with and to a core-shell rubber to compensate for low adhesion.

Further, a purpose of the present disclosure is to provide a thermal-resistant epoxy structural adhesive composition having excellent adhesion in which a monomer having a vinyl group at an end thereof and a monomer having a thiol group at an end thereof are simultaneously introduced to realize high adhesive strength and fast curable property, and in particular, a monomer with a multifunctional thiol group has nano-toughening properties and high adhesive properties, and have excellent effects even when used in a small amount such that the thermal resistance is maintained at the same level.

The technical purposes to be achieved by the disclosure are not limited to the technical purposes mentioned above. Still another technical purpose not mentioned will be clearly understood by those of ordinary skill in the technical field to which the present disclosure belongs from descriptions below.

### TECHNICAL SOLUTIONS

An impact-resistant and thermal-resistant epoxy structural adhesive composition according to the present disclosure includes:
(a) a first component including an epoxy-cyanate ester intermediate and core-shell rubber particles;
(b) a second component including a flame retardant and core-shell rubber particles dispersed in a tetrafunctional epoxy monomer; and
(c) a third component including two types of monomers respectively having a vinyl group and a multifunctional thiol group at ends thereof.

Further, a method for preparing an impact-resistant and thermal-resistant epoxy structural adhesive composition according to the present disclosure includes:
a first step of mixing core-shell rubber particles with an epoxy-cyanate ester intermediate prepared by heating liquid epoxy resin and cyanate ester at 80°C for 30 minutes, stirring a resulting mixture at 100°C for 3 hours, and then cooling the mixture to room temperature, thereby preparing a first component;
a second step of mixing flame retardant with a tetrafunctional epoxy monomer and stirring a resulting mixture at 80°C for 30 minutes, mixing the mixture with core-shell rubber particles, stirring a resulting mixture at 80°C for 3 hours, and then slowly cooling the mixture to room temperature, thereby preparing a second component;
a third step of providing a third component including two types of monomers respectively having a vinyl group and a multifunctional thiol group at ends thereof; and
a fourth step of mixing the first component and the second component at room temperature for 10 minutes and then adding and mixing the third component and a curing accelerator into and with a resulting mixture, and then stirring a further resulting mixture for 30 minutes and then slowly cooling the further resulting mixture to room temperature.

### TECHNICAL EFFECTS

Thus, the present disclosure may provide an epoxy composition that simultaneously exhibits both of high adhesive strength and thermal-resistant properties due to a thermal-resistant epoxy intermediate.

Further, the present disclosure may provide an epoxy composition in which polymer particles are uniformly dispersed in a thermal-resistant epoxy monomer to exhibit excellent impact-resistance properties.

Further, the present disclosure may provide a fast-curable thermal-resistant epoxy composition in which a monomer having a vinyl group at an end thereof and a monomer having a thiol group at an end thereof are simultaneously introduced to realize high adhesive strength and fast curable property, thereby exhibiting high shear adhesive strength while maintaining thermal-resistant properties while at the same time exhibiting high impact-resistance properties.

Further, a purpose of the present disclosure is to solve a problem of liquid cyanate ester which has excellent thermal-resistance but has poor storage properties for use as a component of a one-component adhesive and thus to provide an epoxy structural adhesive composition having increased storage and having maintained adhesion and thermal-resistance.

Further, the present disclosure may provide a thermal-resistant epoxy structural adhesive composition with excellent adhesion and thermal-resistance by dispersing core-shell rubber (CSR) particles in a process of preparing the epoxy-cyanate ester intermediate such that the epoxy-cyanate ester intermediate is integrated with the core-shell rubber via a bonding reaction between a vinyl group present in a portion on a surface of the core-shell rubber and the cyanate ester.

Further, the present disclosure may provide a thermal-resistant epoxy structural adhesive composition with excellent adhesion by mixing and introducing a phosphate capable of realizing nano-toughening properties with and to a core-shell rubber to compensate for low adhesion resulting from introducing of a tetrafunctional epoxy monomer as a high thermal-resistant epoxy monomer.

Further, the present disclosure may provide a thermal-resistant epoxy structural adhesive composition having excellent adhesion in which a monomer having a vinyl group at an end thereof and a monomer having a thiol group at an end thereof are simultaneously introduced to realize high adhesive strength and fast curable property, and in particular, a monomer with a multifunctional thiol group has nano-toughening properties and high adhesive properties, and have excellent effects even when used in a small amount such that the thermal resistance is maintained at the same level.

### BRIEF DESCRIPTION OF THE DRAWINGS

FIG. 1 is a flow chart showing a method for preparing an impact-resistant and thermal-resistant epoxy structural adhesive composition according to the present disclosure.
FIG. 2 is a flowchart showing a method for preparing an impact-resistant and thermal-resistant epoxy structural adhesive composition in which a first-first step is added to a first step in FIG. 1.

### DETAILED DESCRIPTIONS

A brief description of terms used in this specification will be made, and a detailed description of the present disclosure will be made.

The terms used in the present disclosure are selected as currently widely used general terms as possible while considering functions thereof in the present disclosure. However, the meaning thereof may vary depending on intention of a technician in the field, a judicial precedent or emergence of new technology, etc. Therefore, the term used in the present disclosure should be defined based on the meaning of the terms and the overall content of the present disclosure rather than based on names of the terms.

It will be further understood that the terms "comprises", "comprising", "includes", and "including" when used in this specification, specify the presence of the stated features, integers, operations, elements, and/or components, but do not preclude the presence or addition of one or greater other features, integers, operations, elements, components, and/or portions thereof.

With reference to the accompanying drawings, the present disclosure will be described in detail, based on embodiments thereof so that a person with ordinary skill in the technical field to which the present disclosure belongs may easily implement the disclosure. However, the present disclosure may be implemented in several different forms and is not limited to the embodiments described herein.

Specific details including the technical purposes, solutions and effects of the present disclosure are included in the embodiments and drawings to be described below. Advantages and features of the present disclosure, and how to achieve them will become apparent with reference to the embodiments as described below in detail in conjunction with the accompanying drawings.

Hereinafter, the present disclosure will be described in more detail with reference to the accompanying drawings.

An impact-resistant and thermal-resistant epoxy structural adhesive composition according to the present disclosure includes: (a) a first component including an epoxy-cyanate ester intermediate and core-shell rubber particles; (b) a second component including a flame retardant and core-shell rubber particles dispersed in a tetrafunctional epoxy monomer; and (c) a third component including two types of monomers respectively having a vinyl group and a multifunctional thiol group at ends thereof.

First, the first component includes the epoxy-cyanate ester intermediate and the core-shell rubber particles that bind to cyanate ester.

The epoxy-cyanate ester intermediate is prepared by dispersing the core-shell rubber particles in an intermediate process of preparing the epoxy-cyanate ester intermediate and then bonding the vinyl group present on the surface of the core-shell rubber particles with the cyanate ester.

The epoxy-cyanate ester intermediate may employ cyanate ester as a monomer, and may include bisphenol-A, bisphenol-C, bisphenol-E, bisphenol-F, bisphenol-M and novolak-type cyanate ester, which may be used alone or in a mixed form.

The cyanate ester monomer may be represented by a structural formula of a following Chemical Formula 1:

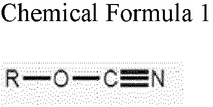

(In Chemical Formula 1, R denotes a chain having 1 to 18 carbon atoms).

Further, the cyanate ester monomer may be represented by a structural formula of a following Chemical Formula 2:

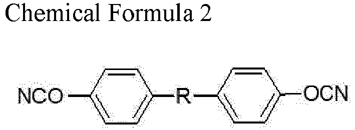

(In Chemical Formula 1, R denotes a chain having 1 to 18 carbon atoms).

Further, more various types of the cyanate ester monomer may be specifically represented as following Chemical Formula 3 to Chemical Formula 9:

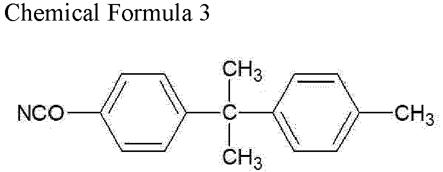

4-2-(4-methylphenyl)propan-2-ylphenyl cyanate

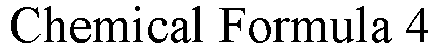

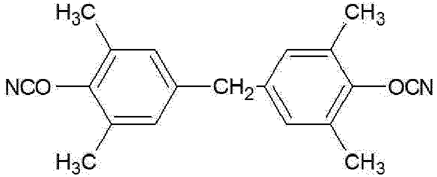

### methylenebis(2,6-dimethyl-4,1-phenylene) dicyanate

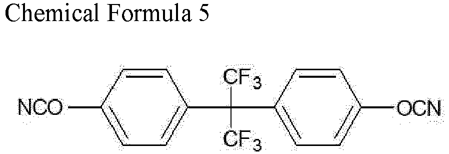

### (1,1,1,3,3,3-hexafluoropropane-2,2-diyl)di(4,1-phenylene) dicyanate

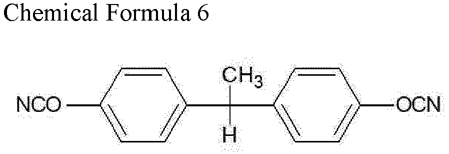

### (ethane-1, 1-diyl)di(4,1 -phenylene) dicyanate

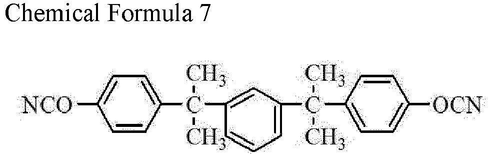

### 4,4'-Methylenebis(phenyl isocyanate)

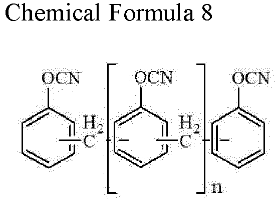

### Polymeric-Diphenylmethane diisocyanate

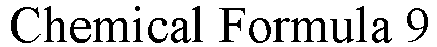

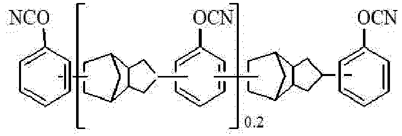

### Polymeric 4,7-Methano-1H-indene, octahydro-phenyl isocyanate

A content of the epoxy-cyanate ester intermediate is preferably in a range of 20 to 60% by weight based on a total weight of the composition. When the content of the intermediate is smaller than 20% by weight, the effect of adding the intermediate is poor. When the content of the intermediate exceeds 60% by weight, mechanical properties are deteriorated. Thus, it is preferable to meet the above condition.

Further, when cyanate monomer is used alone, thermal-resistance is excellent, but adhesion and impact-resistance are significantly reduced. When the cyanate monomer is used for a one-component heating adhesive, it causes a problem of deterioration in storage properties. Thus, it is preferable to use the cyanate monomer in a form of an epoxy-cyanate polymer.

The epoxy resin used for the epoxy-cyanate ester intermediate preparation is liquid and solid bisphenol A, bisphenol F, and epichlorohydrin alone or a mixture thereof, and the epoxy equivalent is preferably 100 to 800 based on the bisphenol A. When the epoxy equivalent is smaller than 100, there is a problem of mechanical property degradation. When the epoxy equivalent exceeds 800, there is a problem of thermal-resistant degradation. Thus, it is preferable to meet the above condition.

In the epoxy-cyanate ester intermediate preparation, the content of the epoxy resin is preferably 40 to 80% by weight based on a weight of the intermediate composition. When the content of the epoxy resin is smaller than 40% by weight, it is undesirable because it causes a decrease in the storage properties of the intermediate. When it exceeds 80% by weight, it is not preferable because it causes a decrease in thermal-resistant performance.

The core-shell rubber (CSR) particles are added and dispersed to impart impact-resistance in the epoxy-cyanate ester intermediate preparation. The core-shell rubber particles may be selected from commercial products that may be mixed with the epoxy resin, and a typical product thereof as used is Rom & Haas CSR particles. The core-shell rubber particles are incorporated in the synthesis process of the epoxy-cyanate intermediate. The cyanate ester may be bonded to the vinyl group or carboxyl group present in the portion on the surface of the core-shell rubber particles to allow the intermediate to be chemically bonded to an interface of the core-shell rubber particle. Excellent impact-resistance property and adhesion improvement effect may be expected due to the bonding at the interface between thermal-resistant and rigid resin or monomer and the core-shell rubber particle.

The content of the core-shell rubber particles is preferably 10 to 25% by weight based on a weight of the intermediate composition. When the content of the core-shell rubber particles is smaller than 10% by weight, the impact-resistance property of the intermediate is deteriorated, which is undesirable. When it exceeds 25% by weight, the viscosity of the intermediate increases excessively and thus the thermal-resistant performance is lowered.

Further, it is preferable to further include polyether monoamine (PEA) in the first component. The polyether monoamine together with the core-shell rubber particles acts as a toughening agent in the synthesis of the epoxy-cyanate ester polymer, and at the same time, the PEA includes hydrophilic and lipophilic groups in a main chain thereof and thus has a function of spraying the core-shell rubber particles using polarity balance. The polyether monoamine has a weight average molecular weight of 500 to 5,000 and includes ethylene oxide and propylene oxide chains in the main chain. Because the polyether monoamine includes an amine group at an end thereof, it participates in the curing reaction to allow a branched chain to be formed after the curing reaction. Thus, the branched chain plays a toughening role.

The polyether monoamine is preferably in an amount of 2 to 10 wt% based on the total weight of the composition. When the polyether monoamine is smaller than 2% by weight, the toughening role may be poor. When the polyether monoamine exceeds 10% by weight, the thermal and mechanical properties of the prepared adhesive may be deteriorated. Thus, it is preferable to meet the above condition.

The polyether monoamine may be at least one compound selected from a group consisting of compounds represented by a following Chemical Formula 10 and a following Table 1:

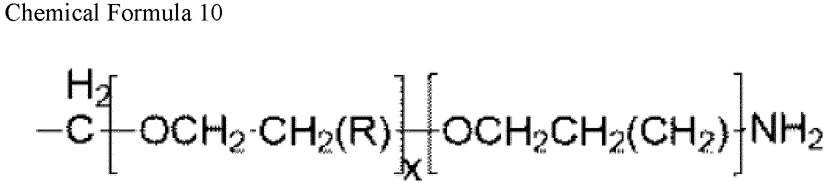

In this connection, R=H, CH3, and X is 1 to10.

Further, more specifically, the polyether monoamine may be at least one compound selected from a group consisting of compounds represented by Chemical Formulas shown in the following Table 1:

**Table 1**

| Structure | x/y ratio | Molecular Weight |
|---|---|---|
| CH₃-[OCH₂CH₂]ₓ-[OCH₂CH(CH₃)]_{y}-NH₂ | 1/9 | 600 |
| | 6/29 | 2,000 |
| | 19/3 | 1,000 |
| | 41/4 | 2,000 |
| | 33/10 | 2,000 |
| | 58/8 | 3,000 |
| C₉H₁₉-O-[OCH₂CH(CH₃)]_{12.5}-OCH₂CH(CH₃)-NH₂ | - | 1,000 |

Next, the second component preferably includes flame retardant and core-shell rubber particles dispersed in a tetrafunctional epoxy monomer. When the tetrafunctional epoxy monomer is used alone as the second component, the thermal-resistance is excellent, but the adhesiveness and the impact-resistance are remarkably deteriorated, which is not preferable.

A content of the tetrafunctional epoxy monomer is preferably 20 to 60% by weight based on the total weight of the composition. When the content of the intermediate is smaller than 20% by weight, the adhesion improvement effect is poor and undesirable. When it exceeds 60% by weight, mechanical properties and thermal-resistance are deteriorated. Thus, it is preferable to meet the above condition.

The tetrafunctional epoxy monomer is preferably tetraglycidyl methylenedianiline (TGDDM) represented by a following Chemical Formula 11:

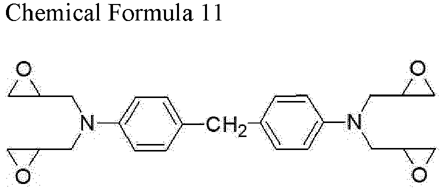

### tetraglycidyl methylenedianiline (TGDDM)

The flame retardant is preferably phosphate, and more specifically, may be tri-m-cresyl phosphate (hereinafter, TCP) represented by a following Chemical Formula 12. The TCP is a liquid mono-molecule, and is mixed with the tetrafunctional epoxy monomer. The TCP forms a three-dimensional structure to achieve a nano-toughening effect, and has a dispersant function in the process of dispersing the core-shell rubber particles, and thus is very useful in the present disclosure. That is, the TCP and the core-shell rubber particles provide a nano-sized hybrid toughener function.

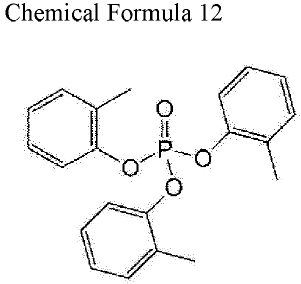

### Tri-m-cresyl phosphate (TCP)

A content of the liquid TCP is preferably 2 to 10% by weight based on a wight of the tetrafunctional epoxy monomer. When the content of the liquid TCP is smaller than 2% by weight, it is undesirable because it causes a decrease in the surface adhesive property of the composition. When it exceeds 10% by weight, it causes a decrease in the mechanical properties of the composition. Thus, it is preferable to meet the above condition.

A content of the core-shell rubber particles of the second component is preferably 10 to 25% by weight based on a weight of the tetrafunctional epoxy monomer. When the content of the core-shell rubber particles is smaller than 10% by weight, it is undesirable to cause a decrease in the impact-resistance property of the intermediate prepared in the second component. When it exceeds 25% by weight, the viscosity of the intermediate increases excessively, which is undesirable because it causes deterioration of thermal-resistant performance.

Next, the third component includes two types of monomers respectively having a vinyl group (Trimethylolpropane triacrylate (TMPTA)/Divinyl ester) and a multifunctional thiol group (Pentaerythritol tetrakis (3-mercaptopropionate, PEMP)/Dipentaerythritol hexakis (3-mercaptopropionate, DPMP)) at ends thereof. The monomer having a thermal-resistant vinyl group (RIPOXY H600, H630 of Showa Denko Co., Ltd.) at the end thereof is an acrylate monomer, and preferably has a molecular weight smaller than 1,000. There is no particular limitation on a chemical structure thereof and the number of functional groups thereof. However, it is more preferable that a main chain or a chain branch has a benzene ring. Further, the monomer having the multifunctional thiol group at the end thereof is preferably a monomer having 3 to 6-functional thiol groups (LECAD803, 804, 806 of SC Organic Chemical). There is no particular limitation on the chemical structure thereof. The molecular weight of the monomer including the thiol group is preferably smaller than 1,000.

A content of the acrylate monomer is preferably 2 to 10% by weight based on the total weight of the composition. When the content of the acrylate monomer is smaller than 2% by weight, the fast-curable effect is poor, which is not preferable. When it exceeds 10% by weight, it is not preferable because the mechanical properties of the composition are deteriorated.

Further, the content of the monomer including the thiol group is preferably 2 to 10% by weight based on the total weight of the composition. When the content of the monomer including the thiol group is smaller than 2% by weight, the effect of improving the fast-curable ability and the adhesive strength is poor, which is not preferable. When it exceeds 10% by weight, it is not preferable because it causes deterioration of the mechanical properties of the composition.

In accordance with the present disclosure, it is preferable to use a combination of the acrylate and the monomer including the thiol group in order to realize the fast curable property and high adhesive property. The monomer combination may simultaneously realize the fast curable property and high adhesive property and may minimize degradation of the mechanical properties.

In accordance with the present disclosure, the first component and the second component are essential. The first component and the second component may be used in an amount of 20 wt% to 70 wt% based on the total weight of the composition. Under the content condition, the physical properties of the adhesive composition may be easily controlled. Therefore, the first component and the second component may be prepared in various composition ratios while maintaining the content of the core-shell rubber particles to be constant based on the total weight of the adhesive composition in consideration of the physical properties of the adhesive composition.

The mixture between the first component, second component and third component may further include a heat-activated latent curing accelerator. The heat-activated latent curing accelerator may include at least one selected from dicyandiamide (hereinafter DICY), diaminodiphenylsulfone (hereinafter DDS), and imidazole. Further, the heat-activated latent curing accelerator may include at least one selected from an inorganic filler, a silane-based coupling agent, fumed silica, and mixtures thereof.

The DICY and DDS selected as the curing accelerator are preferably used in combination with each other rather than alone, thereby achieving adhesion and thermal-resistance. The DICY exhibits strong adhesive performance. The DDS is advantageous in thermal-resistant implementation due to its short chain structure. Although DDS is used alone in most of thermal-resistant adhesive compositions, both DICY and DDS may be used together to maximize adhesive performance and thermal-resistance at the same time in accordance with the present disclosure.

A content of the DICY as the curing accelerator is preferably 2 to 6% by weight based on the total weight of the composition. When the DICY curing accelerator content is smaller than 2% by weight, the adhesive strength effect is poor, which is not preferable. When it exceeds 6% by weight, it is not preferable because the thermal-resistant property of the composition is deteriorated.

A content of the DDS as the curing accelerator is preferably 2 to 12% by weight based on the total weight of the composition. When the DDS curing accelerator content is smaller than 2% by weight, the thermal-resistant property improvement effect is poor, which is not preferable. When it exceeds 12% by weight, it is not preferable because the adhesive strength of the composition is deteriorated.

Further, the mixing ratio of DICY and DDS is preferably 1:4 to 1:1, so that the total content of the curing accelerator is 8 to 15% by weight based on the total weight of the adhesive composition.

The DICY and DDS are respectively represented by following Chemical Formula 13 and Chemical Formula 14:

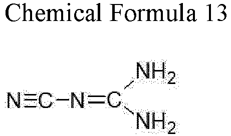

### Dicyandiamide (DICY)

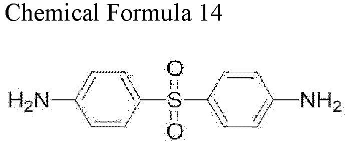

### diaminodiphenylsulfone (DDS)

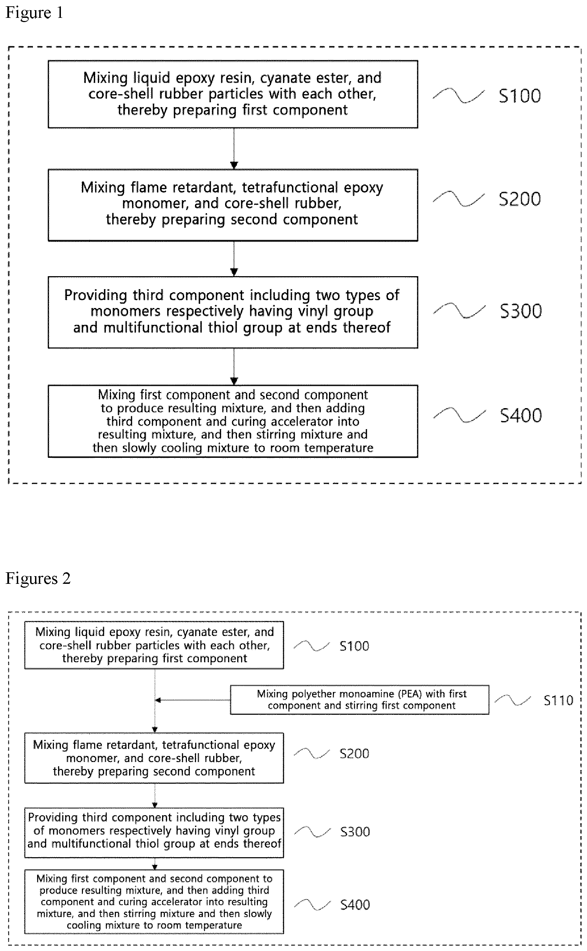

Hereinafter, a method for preparing an impact-resistant and thermal-resistant epoxy structural adhesive composition according to the present disclosure will be described in detail. Each of FIG. 1 and FIG. 2 shows a flowchart of a method for preparing the composition according to the present disclosure.

First, in a first step (S100), the core-shell rubber particles are mixed with the epoxy-cyanate ester intermediate prepared by heating the liquid epoxy resin and cyanate ester at 80°C for 30 minutes, a resulting mixture is stirred at 100°C for 3 hours, and then is cooled down at room temperature to prepare the first component.

In the first step (S100), when the heating of the liquid epoxy resin and cyanate ester is carried out at a temperature lower than 80°C, the formation amount of the main chain of the epoxy-cyanate ester intermediate may be poor. When the temperature exceeds 80°C, the main chain of the epoxy-cyanate ester intermediate may be broken. Thus, it is preferable to meet the above condition.

Further, when the heating of the liquid epoxy resin and cyanate ester is carried out at 80°C for a duration smaller than 30 minutes in the first step (S100), the formation amount of the main chain of the epoxy-cyanate ester intermediate may be poor. When the duration exceeds 30 minutes, there is a risk of deformation of the epoxy-cyanate ester intermediate. Because the epoxy-cyanate ester intermediate is unstable and is sensitive to the temperature and the time duration, it is preferable to meet the above condition.

Thereafter, when the core-shell rubber particles are mixed with the epoxy-cyanate ester intermediate and then the stirring of the mixture is carried out at a temperature than 100°C, the dispersion of the core-shell rubber particles is poor, and the binding reaction between the vinyl group present in the portion on the surface of the core-shell rubber particles and the cyanate ester is poor. When the temperature exceeds 100°C, the epoxy-cyanate ester intermediate may be deformed. Thus, it is preferable to meet the above condition.

Further, when the core-shell rubber particles are mixed with the epoxy-cyanate ester intermediate and then the mixture is stirred at 100°C for a duration smaller than 3 hours, the dispersion of the core-shell rubber particles may be poor. When the duration is larger than 3 hours, the core-shell rubber particles may be denatured. Thus, it is preferable to meet the above condition.

As previously described with reference to the first component, the epoxy-cyanate ester intermediate may employ cyanate ester as a monomer. Bisphenol-A, bisphenol-C, bisphenol-E, bisphenol-F, bisphenol-M and novolak type cyanate ester may be employed and may be used alone or in combination with each other. The cyanate ester monomer may be represented by at least one of the structural formulas of Chemical Formula 1 to Chemical Formula 9.

A content of the epoxy-cyanate ester intermediate is preferably 20 to 60% by weight based on the total weight of the composition.

The epoxy resin may include liquid and solid bisphenol A, bisphenol F, and epichlorohydrin along or a mixture thereof, and the epoxy equivalent weight is preferably 130 to 800 based on bisphenol A. Further, in the preparation of the epoxy-cyanate ester intermediate preparation, the content of the epoxy resin is preferably 40 to 80% by weight based on a weight of the intermediate composition.

The core-shell rubber (CSR) particles are mixed and dispersed to impart impact-resistance in the epoxy-cyanate ester intermediate preparation. The core-shell rubber particles may be selected from commercial products that may be mixed with the epoxy resin, and a typical product thereof as used is Rom & Haas CSR particles. The core-shell rubber particles are incorporated in the synthesis process of the epoxy-cyanate intermediate. The cyanate ester may be bonded to the vinyl group or carboxyl group present in the portion on the surface of the core-shell rubber particles to allow the intermediate to be chemically bonded to an interface of the core-shell rubber particle. Excellent impact-resistance property and adhesion improvement effect may be expected due to the bonding at the interface between thermal-resistant and rigid resin or monomer and the core-shell rubber particle. The content of the core-shell rubber particles is preferably 10 to 25% by weight based on a weight of the intermediate composition.

Next, after the first step (S100) is performed, a first-first step (S110) is performed. In the first-first step (S110), polyether monoamine (PEA) is mixed with the first component cooled to room temperature in the first step (S100) and then, a resulting mixture is stirred.

As previously described with referring to the first component, it is preferable to further include polyether monoamine in the first component. The polyether monoamine together with the core-shell rubber particles acts as a toughening agent in the synthesis of the epoxy-cyanate ester polymer, and at the same time, the PEA includes hydrophilic and lipophilic groups in a main chain thereof and thus has a function of spraying the core-shell rubber particles using polarity balance. The polyether monoamine has a weight average molecular weight of 500 to 5,000 and includes ethylene oxide and propylene oxide chains in the main chain. Because the polyether monoamine includes an amine group at an end thereof, it participates in the curing reaction to allow a branched chain to be formed after the curing reaction. Thus, the branched chain plays a toughening role.

The polyether monoamine is not inserted into the main chain of the first component, but only affects the side chain thereof. As a result, PEA acts as a dispersing and toughening agent. Further, the polyether monoamine may be at least one compound selected from a group consisting of compounds represented by the Chemical Formula 10 and the Table 1:

More specifically, in the first-first step (S110), after cooling the first component, the polyether monoamine is preferably added to the first component and the mixture is stirred. When the polyether monoamine is added to the first component, the viscosity increases and the temperature increases. Therefore, after the polyether monoamine is added thereto, the temperature must be maintained at 60°C or lower. Further, before mixing the polyether monoamine therewith, the first component must be cooled to room temperature and stirred to prevent deformation or denaturation of the first component.

Adding the polyether monoamine thereto in the first-first step (S110) is intended to maintain the thermal-resistance and strength. Since nano sized portions of the polyether monoamine overlap each other, other compounds in a form of a polymer may not be used.

As described above with referring to the first component, the content of the polyether monoamine is preferably 2 to 10 wt% based on the total weight of the composition.

Next, in the second step (S200), the flame retardant is mixed with the tetrafunctional epoxy monomer and a resulting mixture is stirred at 80°C for 30 minutes. Then, the core-shell rubber particles are mixed with the mixture which, in turn, is stirred at 80°C for 30 minutes, and then slowly cooled to room temperature to prepare the second component.

In the second step (S200), when the flame retardant is mixed with the tetrafunctional epoxy monomer and the stirring of the mixture is carried out at a temperature lower than 80° C, the flame retardant forms a side chain on the tetrafunctional epoxy monomer such that the side chain formation is poor. When the temperature exceeds 80°C, the formed side chain may be broken or the three-dimensional structure of the flame retardant may be denatured. Thus, it is preferable to meet the above condition.

Further, in the second step (S200), when the flame retardant is mixed with the tetrafunctional epoxy monomer and then the mixture is stirred at 80° C for a duration smaller than 30 minutes, the flame retardant forms a side chain on the tetrafunctional epoxy monomer such that the side chain formation may be poor. When the duration exceeds 30 minutes, there is a risk that the three-dimensional structure of the flame retardant may be denatured. Thus, it is preferable to meet the above condition.

Thereafter, when the core-shell rubber particles are mixed with the mixture of the flame retardant and the tetrafunctional epoxy monomer to produce the further mixture, and then the further mixture is stirred at a temperature lower than 80° C, the dispersion of the core-shell rubber particles may be poor. When the temperature is higher than 80°C, there is a risk that the tetrafunctional epoxy monomer and the flame retardant mixture may be denatured. Thus, it is preferable to meet the above condition.

Further, the core-shell rubber particles are mixed with the mixture of the flame retardant and the tetrafunctional epoxy monomer to produce the further mixture, and then the further mixture is stirred at 80° C for a duration smaller than 30 minutes, the dispersion of the core-shell rubber particles may be poor. When the duration is larger than 30 minutes, the core-shell rubber particles may be denatured. Thus, it is preferable to meet the above condition.

It is preferable to mix the core-shell rubber particles with the mixture of the flame retardant and the tetrafunctional epoxy monomer to produce the further mixture and then cool the further mixture slowly to room temperature. In event of rapid cooling, the mixture of the tetrafunctional epoxy monomer and the flame retardant may be broken. Thus, it is preferable to meet the above condition.

As described above with reference to the second component, when the tetrafunctional epoxy monomer is used alone in the second component, the thermal-resistance is excellent, but the adhesiveness and the impact-resistance are remarkably deteriorated, which is not preferable. The content of the tetrafunctional epoxy monomer is preferably 20 to 60% by weight based on the total weight of the composition. The tetrafunctional epoxy monomer is preferably tetraglycidyl methylenedianiline (TGDDM) represented by the above Chemical Formula 11.

The flame retardant is preferably phosphate, and more specifically, may be tri-m-cresyl phosphate (hereinafter, TCP) represented by a following Chemical Formula 12. The TCP is a liquid mono-molecule, and is mixed with the tetrafunctional epoxy monomer. The TCP forms a three-dimensional structure to achieve a nano-toughening effect, and has a dispersant function in the process of dispersing the core-shell rubber particles, and thus is very useful in the present disclosure. That is, the TCP and the core-shell rubber particles provide a nano-sized hybrid toughener function.

A content of the liquid TCP is preferably 2 to 10% by weight based on a weight of the tetrafunctional epoxy monomer. The content of the core-shell rubber particles of the second component is preferably 10 to 25% by weight based on a weight of the tetrafunctional epoxy monomer.

Next, the third step (S300) provides the third component including two types of monomers respectively having a vinyl group and a multifunctional thiol group at ends thereof.

The monomer having a thermal-resistant vinyl group at the end thereof is an acrylate monomer, and preferably has a molecular weight smaller than 1,000. There is no particular limitation on a chemical structure thereof and the number of functional groups thereof. However, it is more preferable that a main chain or a chain branch has a benzene ring. Further, the monomer having the multifunctional thiol group at the end thereof is preferably a monomer having 3 to 6-functional thiol groups. There is no particular limitation on the chemical structure thereof. The molecular weight of the monomer including the thiol group is preferably smaller than 1,000.

The content of the acrylate monomer is preferably 2 to 10% by weight based on the total weight of the composition. Further, the content of the monomer including the thiol group is preferably 2 to 10% by weight based on the total weight of the composition.

In accordance with the present disclosure, it is preferable to use a combination of the acrylate and the monomer including the thiol group to realize the fast curable property and high adhesive property. The monomer combination may simultaneously realize the fast curable property and high adhesive property and may minimize degradation of the mechanical properties.

Next, the method includes the fourth step (S400) of mixing the first component and the second component at room temperature for 10 minutes and then adding and mixing the third component and a curing accelerator into and with a resulting mixture, and then stirring a further resulting mixture for 30 minutes and then slowly cooling the further resulting mixture to room temperature.

When the mixing of the first component and the second component are carried out for a duration smaller than 10 minutes at room temperature, the mixing is poor and the mixing of the TCP is poor, such that there is a risk of lowering the surface adhesion due to the TCP. When the mixing is carried out at room temperature for a duration larger than 10 minutes, the epoxy-cyanate ester intermediate may be broken. Thus, it is preferable to meet the above condition.

Then, when the mixing of the third component and the curing accelerator with the mixture of the first component and the second component is carried out for a duration smaller than 30 minutes, the mixing of the third component is poor, so that the fast curable property and high adhesive effect may be poor. When the mixing is carried out for a duration larger than 30 minutes, the first component, second component, and third component may be broken as the temperature is increased due to the curing accelerator. Thus, it is preferable to meet the above condition.

As previously described with referring to the curing accelerator, the heat-activated latent curing accelerator may include at least one selected from dicyandiamide (hereinafter DICY), diaminodiphenylsulfone (hereinafter DDS), and imidazole. Further, the heat-activated latent curing accelerator may include at least one selected from an inorganic filler, a silane-based coupling agent, fumed silica, and mixtures thereof.

The DICY and DDS selected as the curing accelerator are preferably used in combination with each other rather than alone, thereby achieving adhesion and thermal-resistance. The DICY exhibits strong adhesive performance. The DDS is advantageous in thermal-resistant implementation due to its short chain structure. Although DDS is used alone in most of thermal-resistant adhesive compositions, both DICY and DDS may be used together to maximize adhesive performance and thermal-resistance at the same time in accordance with the present disclosure.

A content of the DICY as the curing accelerator is preferably 2 to 6% by weight based on the total weight of the composition. A content of the DDS as the curing accelerator is preferably 2 to 12% by weight based on the total weight of the composition. Further, the mixing ratio of DICY and DDS is preferably 1:4 to 1:1, so that the total content of the curing accelerator is 8 to 15% by weight based on the total weight of the adhesive composition. The DICY and DDS are respectively represented by the Chemical Formula 13 and Chemical Formula 14.

Hereinafter, an example in which an adhesive composition having thermal-resistance and impact-resistance properties while implementing high adhesive strength according to the present disclosure is prepared will be described in detail.

### (A) First component: epoxy-cyanate ester intermediate/CSR preparation

We put 130g of liquid epoxy resin (Kukdo Chemical YD-128, bisphenol A type) and 70g of cyanate ester (AroCy B) in a 1.0L SUS container and heated the container at 80°C for 30 minutes, then added 30g of CSR (Rom & Haas coreshell rubber particles) to the container, and then raised the temperature to 100° C and stirred the mixture for 3 hours. After the reaction, the mixture was slowly cooled to room temperature.

### (B) Second component : tetrafunctional epoxy monomer/TCP/CSR mixed resin preparation

We put 200g of liquid TGDDM (Kukdo Chemical) and 10g of TCP (Sigma Aldrich) in a 1.0L SUS container and stirred the mixture at 80°C for 30 minutes, then added 30g of CSR (Rom & Haas coreshell rubber particles) thereto and stirred the mixture at the same temperature for 3 hours. Then, the mixture was slowly cooled to room temperature.

### (C) Formulation

We put 60g of the epoxy-cyanate ester intermediate as the first component and 40g of the tetrafunctional epoxy monomer/TCP/CSR mixed resin as the second component into a 1.0L high-viscosity stirrer and mixed the mixture at room temperature for 10 minutes. Then, we added 4 g of DICY, 10 g of DDS, and 0.5 g of imidazole as the curing accelerator thereto and mixed the mixture for 30 minutes. We were careful such that the temperature did not exceed 60°C while stirring the mixture for 30 minutes. We added 2g of acrylate monomer and 3g of thiol monomer thereto and mixed the mixture. The mixture was slowly cooled to room temperature.

### (D) Evaluation and results

To prepare a specimen, a formulated adhesive 1 was applied evenly to a surface of the specimen at room temperature. A formulated adhesive 2 was prepared in a shape of a tape and cut to fit the shape of the specimen and then applied thereto. The applied adhesive was cured by heating the same in an electric oven at 160°C for 30 minutes or 120°C for 60 minutes. The curing temperature is adjustable, the lower the temperature, the longer the curing time. The effect of the epoxy structural adhesive composition prepared according to the present disclosure was verified based on a measuring result of shear adhesive strength and fracture toughness using the adhesive applied specimen.

### (1) Lap sheer strength (shear adhesive strength: MPa)

For the measurement of the shear adhesive strength, the specimen was maintained at room temperature 23°C for 16 minutes. Then, a shear adhesive strength test according to ASTM D1002 was performed. Thus, the measurement results are shown in Table 2 below.

### (2) GIC fracture toughness mode I measurement (J/m₂)

The fracture toughness mode I was measured according to ASTM D5045, and the measurement results are shown in Table 2 below.

**Table 2**

| Examples | Shear adhesive strength (MPa) | Fracture toughness mode I(CT_{IC})(J/m²) |
|---|---|---|
| Comparative example 1 | 18.4 (Measuring environment: 25°C) | 147 |
| | 0.3 (Measuring environment: 150°C) | - |
| Comparative example 2 | 24.8 (Measuring environment: 25°C) | 28 |
| | 23.1 (Measuring environment: 150°C) | - |
| Comparative example 3 | 26.2 (Measuring environment: 25°C) | 158 |
| | 18.5 (Measuring environment: 150°C) | - |
| Comparative example 4 | 25.3 (Measuring environment: 25°C) | 284 |
| | 2.9 (Measuring environment: 150°C) | - |
| Present example 1 | 32.1 (Measuring environment: 25°C) | 410 |
| | 28.0 (Measuring environment: 150°C) | - |
| Present example 2 | 32.8 (Measuring environment: 25°C) | 407 |
| | 28.7 (Measuring environment: 150°C) | - |
| Present example 3 | 33.1 (Measuring environment: 25°C) | 412 |
| | 30.5 (Measuring environment: 150°C) | - |
| Present example 4 | 28.5 (Measuring environment: 25°C) | 385 |
| | 26.2 (Measuring environment: 150°C) | - |

Comparative example 1: An adhesive prepared only using epoxy. The curing accelerator, acrylate monomer, and thiol monomer are absent.

Comparative example 2: An adhesive prepared by mixing 50% by weight of cyanate ester and 50% by weight of liquid epoxy with each other. The contents of the curing accelerator, acrylate monomer, and thiol monomer are the same as those of the formulated adhesive 1.

Comparative example 3: An adhesive prepared by mixing 50% by weight of cyanate ester, 40% by weight of liquid epoxy, and 10% by weight of NBR-modified epoxy (product of Kukdo). The contents of the curing accelerator, acrylate monomer, and thiol monomer are the same as those of the formulated adhesive 1.

Comparative example 4: an adhesive prepared in the same way as the present example 1, and free of the core-shell rubber. The contents of the curing accelerator, acrylate monomer, and thiol monomer are the same as those of the formulated adhesive 1.

Present example 1: The formulated adhesive 1 prepared by the method for preparing the impact-resistant and thermal-resistant epoxy structural adhesive composition according to the present disclosure and then evenly applied to the surface of the specimen at room temperature.

Present example 2: The formulated adhesive 2 prepared by the method for preparing the impact-resistant and thermal-resistant epoxy structural adhesive composition according to the present disclosure and then formed into a tape shape, cut to fit the shape of the specimen, and then applied thereto.

Present example 3: An adhesive prepared by preparing the first component in the present example 1, cooling the first component to room temperature, and mixing the first component with 3 g of polyether monoamine (PEA)._

Present example 4: An adhesive prepared by mixing 10 g of polyether monoamine (PEA) with the first component in the present example 1.

The technical effects of the disclosure are as follows. The present disclosure may provide an epoxy composition that simultaneously exhibits both of high adhesive strength and thermal-resistant properties due to a thermal-resistant epoxy intermediate.

Further, the present disclosure may provide an epoxy composition in which polymer particles are uniformly dispersed in a thermal-resistant epoxy monomer to exhibit excellent impact-resistance properties.

Further, the present disclosure may provide a fast-curable thermal-resistant epoxy composition in which a monomer having a vinyl group at an end thereof and a monomer having a thiol group at an end thereof are simultaneously introduced to realize high adhesive strength and fast curable property, thereby exhibiting high shear adhesive strength while maintaining thermal-resistant properties while at the same time exhibiting high impact-resistance properties.

Further, a purpose of the present disclosure is to solve a problem of liquid cyanate ester which has excellent thermal-resistance but has poor storage properties for use as a component of a one-component adhesive and thus to provide an epoxy structural adhesive composition having increased storage and having maintained adhesion and thermal-resistance.

Further, the present disclosure may provide a thermal-resistant epoxy structural adhesive composition with excellent adhesion and thermal-resistance by dispersing core-shell rubber (CSR) particles in a process of preparing the epoxy-cyanate ester intermediate such that the epoxy-cyanate ester intermediate is integrated with the core-shell rubber via a bonding reaction between a vinyl group present in a portion on a surface of the core-shell rubber and the cyanate ester.

Further, the present disclosure may provide a thermal-resistant epoxy structural adhesive composition with excellent adhesion by mixing and introducing a phosphate capable of realizing nano-toughening properties with and to a core-shell rubber to compensate for low adhesion resulting from introducing of a tetrafunctional epoxy monomer as a high thermal-resistant epoxy monomer.

Further, the present disclosure may provide a thermal-resistant epoxy structural adhesive composition having excellent adhesion in which a monomer having a vinyl group at an end thereof and a monomer having a thiol group at an end thereof are simultaneously introduced to realize high adhesive strength and fast curable property, and in particular, a monomer with a multifunctional thiol group has nano-toughening properties and high adhesive properties, and have excellent effects even when used in a small amount such that the thermal resistance is maintained at the same level.

A person skilled in the art to which the present disclosure belongs will be able to understand that the above-described technical configuration of the present disclosure may be implemented in other specific forms without changing the technical idea or essential characteristics of the present disclosure.

Therefore, the embodiments as described above are to be understood as illustrative and not restrictive in all respects, and the scope of the present disclosure is indicated by a following claims rather than the detailed description above.

### Reference numerals

S100: A first step of heating liquid epoxy resin and cyanate ester at 80°C for 30 minutes to produce an epoxy-cyanate ester intermediate, mixing core-shell rubber particles with the epoxy-cyanate ester intermediate, stirring a resulting mixture at 100°C for 3 hours, and then cooling the mixture to room temperature, thereby preparing a first component
S110: A first-first step of mixing polyether monoamine (PEA) with the first component cooled to room temperature and stirring the first component
S200: A second step of mixing a flame retardant with a tetrafunctional epoxy monomer and stirring a resulting mixture at 80°C for 30 minutes, mixing the mixture with core-shell rubber particles, stirring the mixture at 80°C for 3 hours, and then slowly cooling the mixture to room temperature, thereby preparing a second component
S300: A third step of providing a third component including two types of monomers respectively having a vinyl group and a multifunctional thiol group at ends thereof
S400: A fourth step of mixing the first component and the second component at room temperature for 10 minutes to produce a resulting mixture, and then adding the third component and a curing accelerator into the resulting mixture, and then stirring the mixture for 30 minutes and then slowly cooling the mixture to room temperature

## Claims

1. An impact-resistant and thermal-resistant epoxy structural adhesive composition comprising:
(a) a first component including an epoxy-cyanate ester intermediate and core-shell rubber particles;
(b) a second component including a flame retardant and core-shell rubber particles dispersed in a tetrafunctional epoxy monomer; and
(c) a third component including two types of monomers respectively having a vinyl group and a multifunctional thiol group at ends thereof.

2. The impact-resistant and thermal-resistant epoxy structural adhesive composition of claim 1, wherein the epoxy-cyanate ester intermediate is prepared by dispersing the core-shell rubber particles in an intermediate process of preparing the epoxy-cyanate ester intermediate such that the cyanate ester and the vinyl group present on a surface of the core-shell rubber particle are coupled to each other.

3. The impact-resistant and thermal-resistant epoxy structural adhesive composition of claim 1, wherein the epoxy-cyanate ester intermediate includes cyanate ester as a monomer, and includes one or a mixture of bisphenol-A type, bisphenol-C type, bisphenol-E type, bisphenol-F type, bisphenol-M type, and novolak type cyanate esters.

4. The impact-resistant and thermal-resistant epoxy structural adhesive composition of claim 3, wherein the monomer is represented by a following Chemical Formula 1: 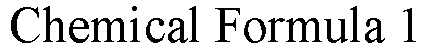 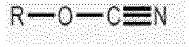 wherein in the Chemical Formula 1, R denotes a chain having 1 to 18 carbon atoms.

5. The impact-resistant and thermal-resistant epoxy structural adhesive composition of claim 3, wherein the monomer is represented by a following Chemical Formula 2: 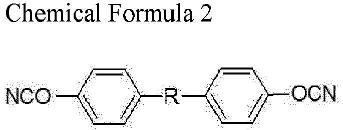 wherein in the Chemical Formula 2, R denotes a chain having 1 to 18 carbon atoms.

6. The impact-resistant and thermal-resistant epoxy structural adhesive composition of claim 1, wherein the tetrafunctional epoxy monomer includes tetraglycidyl methylenedianiline (TGDDM).

7. The impact-resistant and thermal-resistant epoxy structural adhesive composition of claim 1, wherein the first component further includes polyether monoamine (PEA).

8. The impact-resistant and thermal-resistant epoxy structural adhesive composition of claim 1, wherein the composition further comprises a curing accelerator,
wherein the curing accelerator includes at least one selected from a group consisting of dicyandiamide, diaminodiphenylsulfone, or imidazole.

9. A method for preparing an impact-resistant and thermal-resistant epoxy structural adhesive composition, the method comprising:
a first step of heating liquid epoxy resin and cyanate ester at 80°C for 30 minutes to produce an epoxy-cyanate ester intermediate, mixing core-shell rubber particles with the epoxy-cyanate ester intermediate, stirring a resulting mixture at 100°C for 3 hours, and then cooling the mixture to room temperature, thereby preparing a first component;
a second step of mixing a flame retardant with a tetrafunctional epoxy monomer and stirring a resulting mixture at 80°C for 30 minutes, mixing the mixture with core-shell rubber particles, stirring the mixture at 80°C for 3 hours, and then slowly cooling the mixture to room temperature, thereby preparing a second component;
a third step of providing a third component including two types of monomers respectively having a vinyl group and a multifunctional thiol group at ends thereof; and
a fourth step of mixing the first component and the second component at room temperature for 10 minutes to produce a resulting mixture, and then adding the third component and a curing accelerator into the resulting mixture, and then stirring the mixture for 30 minutes and then slowly cooling the mixture to room temperature.

10. The method of claim 9, wherein the epoxy-cyanate ester intermediate is prepared by dispersing the core-shell rubber particles in an intermediate process of preparing the epoxy-cyanate ester intermediate such that the cyanate ester and the vinyl group present on a surface of the core-shell rubber particle are coupled to each other.

11. The method of claim 9, wherein the epoxy-cyanate ester intermediate includes cyanate ester as a monomer, and includes one or a mixture of bisphenol-A type, bisphenol-C type, bisphenol-E type, bisphenol-F type, bisphenol-M type, and novolak type cyanate esters.

12. The method of claim 11, wherein the monomer is represented by a following Chemical Formula 1: 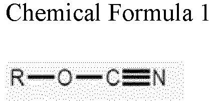 wherein in the Chemical Formula 1, R denotes a chain having 1 to 18 carbon atoms.

13. The method of claim 11, wherein the monomer is represented by a following Chemical Formula 2: 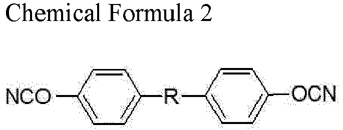 wherein in the Chemical Formula 2, R denotes a chain having 1 to 18 carbon atoms.

14. The method of claim 9, wherein the first step further includes a first-first step of mixing polyether monoamine (PEA) with the first component cooled to room temperature and stirring the first component.

15. The method of claim 9, wherein the composition further comprises a curing accelerator,
wherein the curing accelerator includes at least one selected from a group consisting of dicyandiamide, diaminodiphenylsulfone, or imidazole.

## Patentansprüche

1. Schlagfeste und hitzebeständige Epoxid-Strukturklebstoff-Zusammensetzung, umfassend:
(a) eine erste Komponente, die ein Epoxid-Cyanatester-Zwischenprodukt und Kern-Schale-Kautschukteilchen beinhaltet;
(b) eine zweite Komponente, die ein Flammschutzmittel und Kern-Schale-Kautschukteilchen beinhaltet, die in einem tetrafunktionellen Epoxidmonomer dispergiert sind; und
(c) eine dritte Komponente, die zwei Arten von Monomeren beinhaltet, die an ihren Enden jeweils eine Vinylgruppe und eine multifunktionelle Thiolgruppe aufweisen.

2. Schlagfeste und hitzebeständige Epoxid-Strukturklebstoff-Zusammensetzung nach Anspruch 1, wobei das Epoxid-Cyanatester-Zwischenprodukt durch Dispergieren der Kern-Schale-Kautschukteilchen in einem Zwischenprozess des Herstellens des Epoxid-Cyanatester-Zwischenprodukts so hergestellt wird, dass der Cyanatester und die Vinylgruppe an einer Oberfläche des Kern-Schale-Kautschukteilchens miteinander gekoppelt werden.

3. Schlagfeste und hitzebeständige Epoxid-Strukturklebstoff-Zusammensetzung nach Anspruch 1, wobei das Epoxid-Cyanatester-Zwischenprodukt Cyanatester als Monomer beinhaltet, und einen oder eine Mischung von Cyanatestern des Bisphenol-A-Typs, Bisphenol-C-Typs, Bisphenol-E-Typs, Bisphenol-F-Typs, Bisphenol-M-Typs und Novolak-Typs beinhaltet.

4. Schlagfeste und hitzebeständige Epoxid-Strukturklebstoff-Zusammensetzung nach Anspruch 3, wobei das Monomer durch eine folgende chemische Formel 1 dargestellt wird: 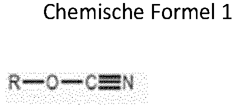 wobei in der chemischen Formel 1 R eine Kette mit 1 bis 18 Kohlenstoffatomen bezeichnet.

5. Schlagfeste und hitzebeständige Epoxid-Strukturklebstoff-Zusammensetzung nach Anspruch 3, wobei das Monomer durch eine folgende chemische Formel 2 dargestellt wird: 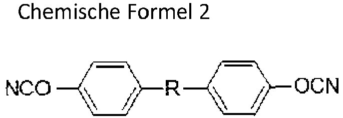 wobei in der chemischen Formel 2 R eine Kette mit 1 bis 18 Kohlenstoffatomen bezeichnet.

6. Schlagfeste und hitzebeständige Epoxid-Strukturklebstoff-Zusammensetzung nach Anspruch 1, wobei das tetrafunktionelle Epoxidmonomer Tetraglycidylmethylendianilin (TGDDM) beinhaltet.

7. Schlagfeste und hitzebeständige Epoxid-Strukturklebstoff-Zusammensetzung nach Anspruch 1, wobei die erste Komponente weiter Polyethermonoamin (PEA) beinhaltet.

8. Schlagfeste und hitzebeständige Epoxid-Strukturklebstoff-Zusammensetzung nach Anspruch 1, wobei die Zusammensetzung weiter einen Härtungsbeschleuniger umfasst,
wobei der Härtungsbeschleuniger mindestens eines beinhaltet, ausgewählt aus einer Gruppe bestehend aus Dicyandiamid, Diaminodiphenylsulfon oder Imidazol.

9. Verfahren zur Herstellung einer schlagfesten und hitzebeständigen Epoxid-Strukturklebstoff-Zusammensetzung, wobei das Verfahren umfasst:
einen ersten Schritt des Erhitzens von flüssigem Epoxidharz und Cyanatester 30 Minuten lang bei 80 °C, um ein Epoxid-Cyanatester-Zwischenprodukt zu erzeugen, Mischens von Kern-Schale-Kautschukteilchen mit dem Epoxid-Cyanatester-Zwischenprodukt, Rührens einer resultierenden Mischung 3 Stunden lang bei 100 °C und dann Abkühlens der Mischung auf Raumtemperatur, wodurch eine erste Komponente hergestellt wird;
einen zweiten Schritt des Mischens eines Flammschutzmittels mit einem tetrafunktionellen Epoxidmonomer und Rührens einer resultierenden Mischung 30 Minuten lang bei 80 °C, Mischens der Mischung mit Kern-Schale-Kautschukteilchen, Rührens der Mischung 3 Stunden lang bei 80 °C und dann langsamen Abkühlens der Mischung auf Raumtemperatur, wodurch eine zweite Komponente hergestellt wird;
einen dritten Schritt des Bereitstellens einer dritten Komponente, die zwei Arten von Monomeren beinhaltet, die an ihren Enden jeweils eine Vinylgruppe und eine multifunktionelle Thiolgruppe aufweisen; und
einen vierten Schritt des Mischens der ersten Komponente und der zweiten Komponente 10 Minuten lang bei Raumtemperatur, um eine resultierende Mischung zu erzeugen, und dann Hinzufügens der dritten Komponente und eines Härtungsbeschleunigers zu der resultierenden Mischung und dann Rührens der Mischung 30 Minuten lang und dann langsamen Abkühlens der Mischung auf Raumtemperatur.

10. Verfahren nach Anspruch 9, wobei das Epoxid-Cyanatester-Zwischenprodukt durch Dispergieren der Kern-Schale-Kautschukteilchen in einem Zwischenprozess des Herstellens des Epoxid-Cyanatester-Zwischenprodukts so hergestellt wird, dass der Cyanatester und die Vinylgruppe an einer Oberfläche des Kern-Schale-Kautschukteilchens miteinander gekoppelt werden.

11. Verfahren nach Anspruch 9, wobei das Epoxid-Cyanatester-Zwischenprodukt Cyanatester als Monomer beinhaltet und einen oder eine Mischung von Cyanatestern des Bisphenol-A-Typs, Bisphenol-C-Typs, Bisphenol-E-Typs, Bisphenol-F-Typs, Bisphenol-M-Typs und Novolak-Typs beinhaltet.

12. Verfahren nach Anspruch 11, wobei das Monomer durch eine folgende chemische Formel 1 dargestellt wird: 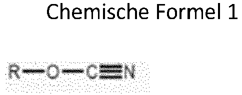 wobei in der chemischen Formel 1 R eine Kette mit 1 bis 18 Kohlenstoffatomen bezeichnet.

13. Verfahren nach Anspruch 11, wobei das Monomer durch eine folgende chemische Formel 2 dargestellt wird: 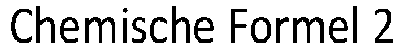 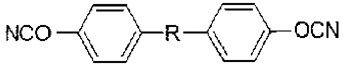 wobei in der chemischen Formel 2 R eine Kette mit 1 bis 18 Kohlenstoffatomen bezeichnet.

14. Verfahren nach Anspruch 9, wobei der erste Schritt weiter einen ersten ersten Schritt des Mischens von Polyethermonoamin (PEA) mit der auf Raumtemperatur abgekühlten ersten Komponente und Rührens der ersten Komponente beinhaltet.

15. Verfahren nach Anspruch 9, wobei die Zusammensetzung weiter einen Härtungsbeschleuniger umfasst,
wobei der Härtungsbeschleuniger mindestens eines beinhaltet, ausgewählt aus einer Gruppe bestehend aus Dicyandiamid, Diaminodiphenylsulfon oder Imidazol.

## Revendications

1. Composition d'adhésif à structure époxy résistant aux chocs et résistant à la chaleur comprenant :
(a) un premier composant incluant un intermédiaire d'ester d'époxy-cyanate et des particules noyau-coque de caoutchouc ;
(b) un deuxième composant incluant un ignifuge et des particules noyau-coque de caoutchouc dispersées dans un monomère époxy tétrafonctionnel ; et
(c) un troisième composant incluant deux types de monomères présentant respectivement un groupe vinyle et un groupe thiol multifonctionnel aux extrémités de ceux-ci.

2. Composition d'adhésif à structure époxy résistant aux chocs et résistant à la chaleur selon la revendication 1, dans laquelle l'intermédiaire d'ester d'époxy-cyanate est préparé par la dispersion des particules noyau-coque de caoutchouc dans un procédé intermédiaire de préparation de l'intermédiaire d'ester d'époxy-cyanate de sorte que l'ester de cyanate et le groupe vinyle présent sur une surface de la particule noyau-coque de caoutchouc se couplent l'un à l'autre.

3. Composition d'adhésif à structure époxy résistant aux chocs et résistant à la chaleur selon la revendication 1, dans laquelle l'intermédiaire d'ester d'époxy-cyanate inclut un ester de cyanate en tant que monomère, et inclut l'un ou un mélange d'esters de cyanate de type bisphénol-A, de type bisphénol-C, de type bisphénol-E, de type bisphénol-F, de type bisphénol-M, et de type novolaque.

4. Composition d'adhésif à structure époxy résistant aux chocs et résistant à la chaleur selon la revendication 3, dans laquelle le monomère est représenté par une formule chimique 1 suivante : 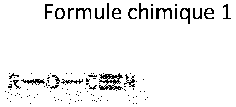 dans laquelle, dans la formule chimique 1, R indique une chaîne présentant 1 à 18 atomes de carbone.

5. Composition d'adhésif à structure époxy résistant aux chocs et résistant à la chaleur selon la revendication 3, dans laquelle le monomère est représenté par une formule chimique 2 suivante : 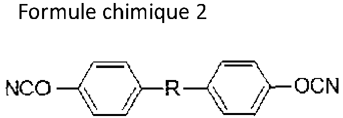 dans laquelle, dans la formule chimique 2, R indique une chaîne présentant 1 à 18 atomes de carbone.

6. Composition d'adhésif à structure époxy résistant aux chocs et résistant à la chaleur selon la revendication 1, dans laquelle le monomère époxy tétrafonctionnel inclut de la tétraglycidylméthylènedianiline (TGDDM).

7. Composition d'adhésif à structure époxy résistant aux chocs et résistant à la chaleur selon la revendication 1, dans laquelle le premier composant inclut en outre une polyéther monoamine (PEA).

8. Composition d'adhésif à structure époxy résistant aux chocs et résistant à la chaleur selon la revendication 1, dans laquelle la composition comprend en outre un accélérateur de durcissement,
dans laquelle l'accélérateur de durcissement inclut au moins l'un sélectionné dans un groupe consistant en le dicyandiamide, la diaminodiphénylsulfone ou l'imidazole.

9. Procédé de préparation d'une composition d'adhésif à structure époxy résistant aux chocs et résistant à la chaleur, le procédé comprenant :
une première étape consistant à chauffer une résine époxy liquide et un ester de cyanate à 80 °C pendant 30 minutes pour produire un intermédiaire d'ester d'époxy-cyanate, mélanger des particules noyau-coque de caoutchouc avec l'intermédiaire d'ester d'époxy-cyanate, agiter un mélange résultant à 100 °C pendant 3 heures, et ensuite refroidir le mélange jusqu'à température ambiante, pour préparer ainsi un premier composant ;
une deuxième étape consistant à mélanger un ignifuge avec un monomère époxy tétrafonctionnel et à agiter un mélange résultant à 80 °C pendant 30 minutes, mélanger le mélange avec des particules noyau-coque de caoutchouc, agiter le mélange à 80 °C pendant 3 heures, et ensuite refroidir lentement le mélange jusqu'à température ambiante, pour préparer ainsi un deuxième composant ;
une troisième étape consistant à fournir un troisième composant incluant deux types de monomères présentant respectivement un groupe vinyle et un groupe thiol multifonctionnel aux extrémités de ceux-ci ; et
une quatrième étape consistant à mélanger le premier composant et le deuxième composant à température ambiante pendant 10 minutes pour produire un mélange résultant, et ensuite à ajouter le troisième composant et un accélérateur de durcissement dans le mélange résultant, et ensuite à agiter le mélange pendant 30 minutes et ensuite à refroidir lentement le mélange jusqu'à température ambiante.

10. Procédé selon la revendication 9, dans lequel l'intermédiaire d'ester d'époxy-cyanate est préparé par la dispersion des particules noyau-coque de caoutchouc dans un procédé intermédiaire de préparation de l'intermédiaire d'ester d'époxy-cyanate pour que l'ester de cyanate et le groupe vinyle présent sur une surface de la particule noyau-coque de caoutchouc se couplent l'un à l'autre.

11. Procédé selon la revendication 9, dans lequel l'intermédiaire d'ester d'époxy-cyanate inclut un ester de cyanate en tant que monomère, et inclut l'un ou un mélange d'esters de cyanate de type bisphénol-A, de type bisphénol-C, de type bisphénol-E, de type bisphénol-F, de type bisphénol-M, et de type novolaque.

12. Procédé selon la revendication 11, dans lequel le monomère est représenté par une formule chimique 1 suivante : 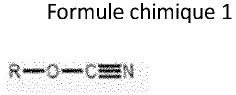 dans laquelle, dans la formule chimique 1, R indique une chaîne présentant 1 à 18 atomes de carbone.

13. Procédé selon la revendication 11, dans lequel le monomère est représenté par une formule chimique 2 suivante : 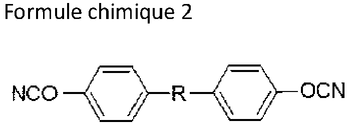 dans laquelle, dans la formule chimique 2, R indique une chaîne présentant 1 à 18 atomes de carbone.

14. Procédé selon la revendication 9, dans lequel la première étape inclut en outre une première première étape consistant à mélanger une polyéther monoamine (PEA) avec le premier composant refroidi à température ambiante et à agiter le premier composant.

15. Procédé selon la revendication 9, dans lequel la composition comprend en outre un accélérateur de durcissement,
dans lequel l'accélérateur de durcissement inclut au moins l'un sélectionné dans un groupe consistant en le dicyandiamide, la diaminodiphénylsulfone ou l'imidazole.
